# EUROPEAN PATENT APPLICATION

(11) **EP 3 725 728 A1**
(43) Date of publication of application: **21.10.2020**
(21) Application number: 20169549.1
(22) Date of filing: 15.04.2020
(51) Int. Cl.: B66C 1/58, B66C 1/68, B66C 13/20, B66C 23/00

(54) **CONTROL SYSTEM FOR CONTROLLING A CRANE ASSEMBLY, METHOD FOR CONTROLLING A CRANE ASSEMBLY AND WORKING VEHICLE**

(30) Priority: 18.04.2019 EP 19170268
(71) Applicant: Deere & Company, Moline, IL 61265 (US)
(72) Inventor: PALMROTH, MIKKO, 68163 Mannheim (DE); PAAKKUNAINEN, MARKO, 68163 Mannheim (DE)
(74) Representative: Lavall, Christian Henner

(57) **Abstract**

Control system configured to control movement of a hydraulically operated crane assembly (12) and a crane tool (20) of a working vehicle (30) with a primary power source (34) and a hydraulic working system, the control system (52) configured to calculate a deviation between an actual value and a predetermined target value of a lifting movement of the crane assembly (12), and configured to control the crane assembly (12) to fulfill the predetermined target value.

## Description

The invention relates to a control system for controlling a crane assembly and a crane tool of a working vehicle. The invention further relates to a method for controlling a crane assembly and a crane tool. The invention further relates to a working machine having a crane assembly.

Working machines comprise an articulated hydraulic crane assembly which further may have a tool attached to a boom tip of the crane. The tool may be a gripping tool, an excavating tool, or in case of forestry related working machines, a harvesting or processing head, or a log grapple. Such crane assemblies and tools handle heavy load, which may comprise of soil or logs or different raw material. Usually such crane assemblies are controlled by hydraulic actuators that are driven by hydraulic power from one or more hydraulic pumps. The pumps are usually powered by the primary power source of the working vehicle.

When the crane assembly is used to lift load, the primary power source is providing the lifting capacity via the hydraulic circuit, the pumps and the hydraulic actuators, also called lifting torque. Every load on the crane assembly has a lever arm which results in a lifting torque applied to the crane assembly. In case load is handled that requires more lifting torque than currently available, or is exceeding the lift capacity, the crane assembly will provide only limited, slow or no movement capabilities. When the actual lifting torque exceeds the available lifting torque of the crane assembly, loading operation cannot proceed. The crane operation requires therefore preplanning of the load and the movements of the crane assembly.

It is the object of the present invention to overcome the aforesaid problem by providing a control system for a crane assembly.

The invention discloses a control system configured to control movement of a hydraulically operated crane assembly and a crane tool of a working vehicle with a primary power source and a hydraulic working system, the control system is configured to calculate a deviation between an actual value and a predetermined target value of a lifting movement of the crane assembly, and configured to control the crane assembly to fulfill the predetermined target value. The control system comprises sensors, which are configured to measure actual values of an actuating speed and/or an actuating hydraulic pressure and/or positioning data of the crane assembly, a control unit, having a CPU, configured to receive the measured actual values, calculate the deviation between the actual value and predetermined target value of the lifting movement of the crane assembly and calculating corrective measures of the crane assembly to minimize deviation, the corrective measures being either of increasing power output of the primary power source, increasing a power output of the hydraulic power source, movement of the crane assembly and/or movement of the crane tool, so that a required lifting torque is reduced and the predetermined target value is fulfilled.

The control system enables calm and fluid work operation of the vehicle and its operator. The crane assembly is adjusted permanently to adjust to the handled workload without interference by the operator. Critical situation of the crane not reacting or even failing are avoided and work safety is increased as well as fatigue of the operator is reduced.

The sensors may be configured to be attached on the crane assembly of a working vehicle, wherein the sensors supply measured data to the control unit.

The sensor can be easily maintained and have direct signal lines to the control system and the related components.

The predetermined target value may be configured to be derived from an operator station of a working vehicle, depending on a lever actuation by the operator according to actuating speed, actuating angle or actuating a button.

The operator's input is used to adjust crane 12. This enables a direct control scheme of crane 12 and reduces unnecessary data collection to control crane 12.

The invention further describes a method of controlling a hydraulically operated crane assembly and a crane tool of a working vehicle with a primary power source and a hydraulic working system, comprising measuring an actual value of an actuating hydraulic pressure and/or an actuating speed and/or a position of the crane assembly, calculating a predetermined target value derived from the operator station of the working vehicle, calculating a deviation of a lifting movement of the crane assembly between the predetermined target value and the actual value, calculating corrective measures to minimize the deviation, controlling the crane assembly to execute the corrective measures and reduce a required lifting torque.

The control method enables calm and fluid work operation of the vehicle and its operator. The crane assembly is adjusted permanently to adjust to the handled workload without interference by the operator. Critical situation of the crane not reacting or even failing are avoided and work safety is increased as well as fatigue of the operator is reduced.

The corrective measures may control a power output of the primary power source and/or controlling the power output of the hydraulic power source and/or controlling movement of the crane assembly.

The parameters enable an effective control of the crane without any intermediate computing steps.

The controlled movement may actuate the crane assembly to move a tip of the crane assembly closer to the base of the crane assembly. This reduce required lifting torque and the lever arm of the crane.

The controlled movement may actuate a boom extension inward to bring a tip of the crane assembly closer to the base of the crane assembly.

The controlled movement may actuate the crane assembly so that the tip of the crane assembly is moving closer to the base of the crane assembly without further lifting the tip of the crane assembly upwards.

The invention further describes a working vehicle comprising a primary power source, a hydraulic power source and a hydraulic working system, a crane assembly, having at least a first and a second boom section, rotatably attached to each other, a boom extension, slidably attached to the second boom section, a boom tip, attached to the boom extension, a slewing apparatus, attached between the working vehicle and the crane assembly, sensors, at least on the crane assembly and the operator station, for measuring a position and/or hydraulic pressure and/or actuating speed of the crane assembly, and a control system according to claim 1.

The vehicle enables calm and fluid work operation of the vehicle and its operator. The crane assembly is adjusted permanently to adjust to the handled workload without interference by the operator. Critical situation of the crane not reacting or even failing are avoided and work safety is increased as well as fatigue of the operator is reduced.

A crane tool may be attached to the crane assembly and controlled by the hydraulic working system.

The invention is further described in the following figures, wherein
Figure 1 shows a forestry vehicle being a harvester;
Figure 2 shows a forestry vehicle being a forwarder;
Figure 3 shows a control scheme of the crane assembly.

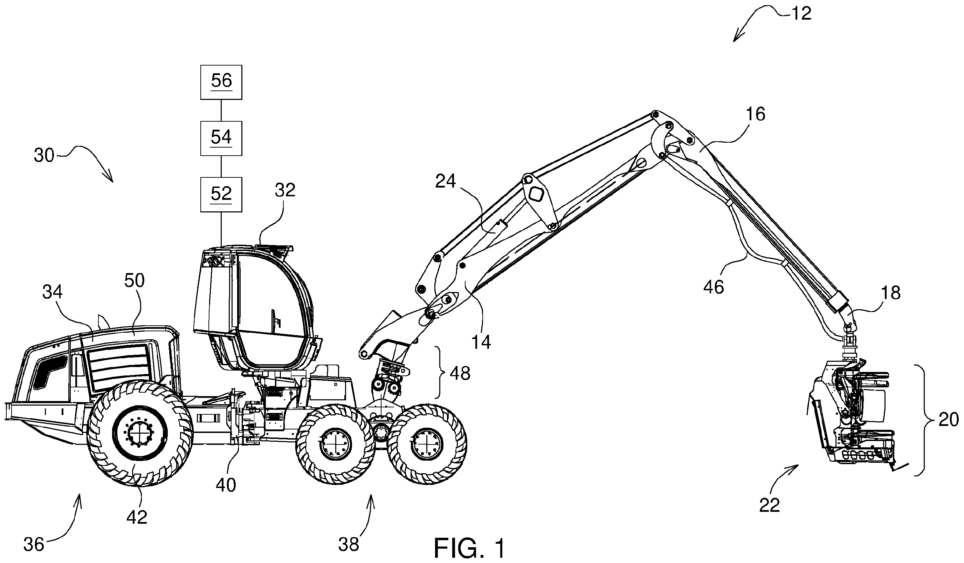

Figure 1 discloses a harvester 30. The harvester has a front and a rear chassis 38 and 26 which are movably connected by a joint 40 and further comprise driven wheels 42 connected to the chassis. By controlling the angle between the chassis parts the harvester can be steered by an operator. The harvester further comprises an engine 34, in this figure attached to the rear chassis 36 but which can be arranged on different areas of the vehicle 30. The engine 34 acts as the primary power source of the vehicle 30 and also drives a main hydraulic pump 50 to power the hydraulic system of the vehicle 30. The engine 34 can also power additional secondary hydraulic systems which are used to actuate smaller hydraulic actuators in the vehicle 30, such as climbing ladders or steps or actuate the operator station 32.

The vehicle 30 has an operator station 32 on the front chassis 38, usually comprising an operator cabin with a seat arrangement for the operator and control surfaces to control the vehicle. The control surfaces can comprise a steering wheel, controls for actuating and moving the crane assembly 12 and attached tools 22. The operator cabin can be movably attached to the front chassis 38, so that the cabin can be rotated and/or tilted. In front of the operator station 32 in figure 1, the crane assembly 12 is movably attached to the front chassis 38. The crane assembly 12 is usually attached by a slewing apparatus 48 which allows to tilt and rotate the complete crane assembly 12 around the vehicle to increase reach of the crane 12.

Crane assembly 12 comprises at least a first boom section 14 and a second boom section 16, movably linked to each other and actuated by hydraulic actuators 24. Crane assembly 12 may further comprise a boom extension 18, which is slidably connected to the second boom section 16 and allows a linear extension of the crane assembly 12 further increasing the reach of the crane 12. Boom tip section 20 is movably connected to boom extension 18 and can comprise a crane tool 22. The boom tip section 20 can also comprise a rotator, which allows actuated rotation of the crane tool 22 around a vertical axis. The crane tool and the rotator are usually supplied by and connected to the hydraulic system by a hydraulic line 46, being provided along or inside of the crane assembly components.

The operator steers the vehicle to the intended felling area and uses the crane assembly 12 to attach the crane tool 22, usually a felling head, to a stem of a tree. The operator uses the control surfaces provided to control the crane 12 and the tool 22 and starts the felling procedure, whereas the tree falls over and is held by the crane tool 22. Then the crane tool is used to cut the stem into sized pieces and cuts of any branches in the process. It might be necessary for the operator to move the crane 12 with the attached fallen tree before cutting due to process need such as available space in the area, steepness of the terrain or length of the tree. The actuation of the crane 12 requires a supply of hydraulic power which is depending on the overall reach of the crane 12 and the weight of the tree in the crane tool 22.

The vehicle 30 comprises a control system 52 which is connected to and comprising the crane assembly 12 and sensors 54 which are measuring various parameters of the crane assembly such as the actuating speed of the crane 12, actuating hydraulic pressure in the hydraulic actuators 46 to move the crane 12 and positioning data of the components of the crane 12, such as the first and second boom section 14, 16, the boom extension 18 and the boom tip section 20. The sensor data is provided to a CPU 56. The CPU calculates a possible deviation between the current supplied data and the input of the operators control surfaces, such as the control lever movement and the control lever actuating speed. A control lever input, such as a lifting command by the operator is transferred into an upward movement of the crane 12. Hydraulic power is supplied to the actuator 46 so that a lifting force of the crane 12 is enabled. In ordinary working conditions this will result in an upward lifting movement of the crane 12.

In case the tree in the crane tool 22 is heavy, or the reach of the crane 12 is at an upper end, the torque on the crane 12 is increased so that a lifting movement of the crane 12 will not be ensured. Sensors 54 detect an increase hydraulic pressure but will also detect non-movement and no positional change of the crane 12. The CPU 56 compares these values with the input lever movement and angle calculating a deviation of crane behavior. The CPU is then used to select between various corrective measurements to return crane operation back to normal working conditions. The CPU can increase the primary power source 34 to increase power output to increase hydraulic power available to the crane 12 and the hydraulic actuators 46. CPU 56 may also control the hydraulic actuators 46 of the crane 12 not to continue a lifting movement but to first actuate the crane 12 to bring the boom tip section 20 closer to the base of the crane 12 in order to reduce the lift arm and lifting torque. This may result in a horizontal movement of the boom tip section 22 without an upward movement. CPU 56 may control all other hydraulic component that are of secondary importance to pause in order to further redirect hydraulic power to the actuators of crane 12. By control system 52 crane 12 is thus able to execute the lifting movement as intended by the operator.

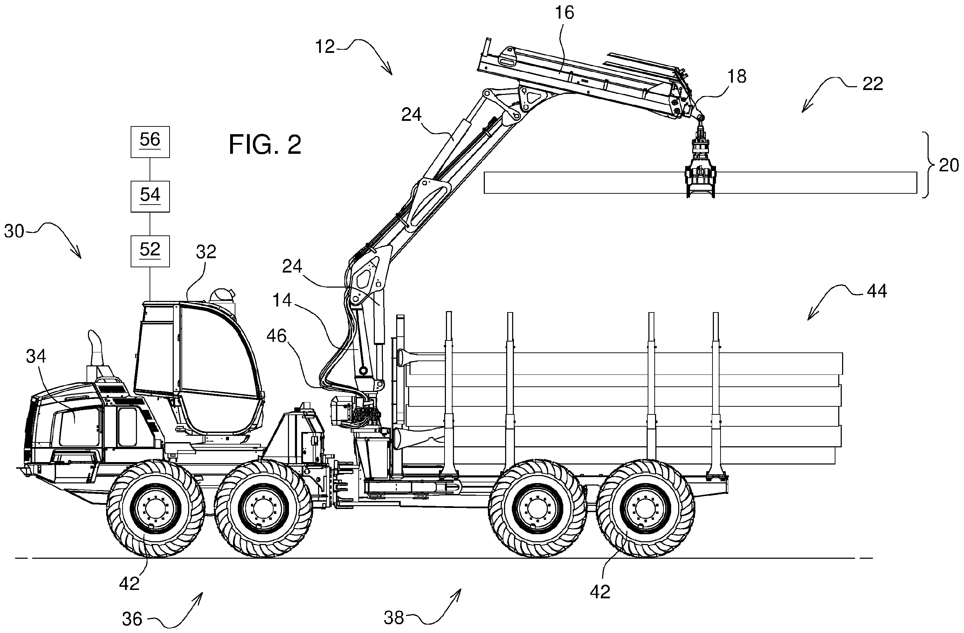

Figure 2 shows a forwarder vehicle 30 used to transport logs out of the felling area. Like the harvester vehicle 30 of Figure 1, the forwarder has a front and rear chassis. Both chassis are movably connected to each other and are actuated hydraulically to enable steering of the vehicle 30. The front chassis 36 carries the operator station 32 and the primary power source or engine 34 and the hydraulic power source 50. The operator cabin can be rotatable, so that the operator can have a forward seated position during drive operation and a bunk facing or rearward seated position during loading operation.

The operator uses crane 12 to load logs from the ground to the bunk space 44. Crane 12 can have a first and second boom section 14 and 16, as well as an intermediate boom section between the first and second boom sections. The crane 12 is controlled by hydraulic actuators 46 mounted between the boom sections. The second boom section 16 may have a boom extension 18, which allows linear extension of the crane reach. At an end of the boom extension a boom tip section 20 may be movably attached, together with a crane tool, usually a grapple to load logs.

The crane 12 can be used to load single or multiple logs at the same time. This operation uses the crane 12 with different loads, leading to different actuating torque of the crane 12. Vehicle 12 is used in different conditions, such as step areas, different seasons and different temperatures and different space conditions.

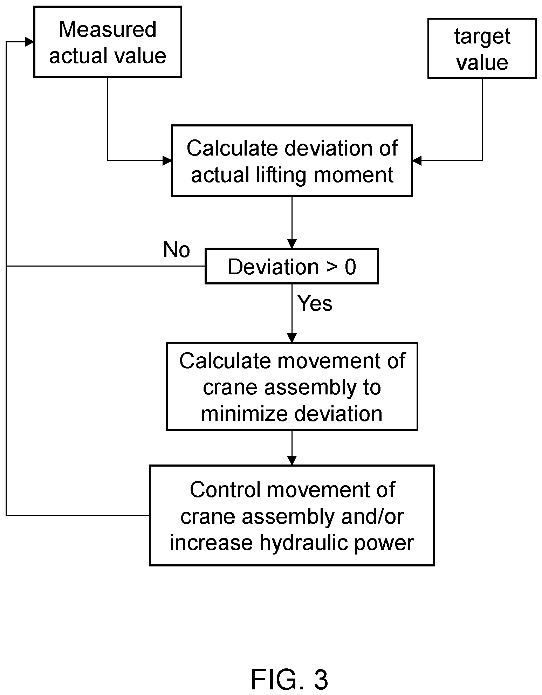

Figure 3 shows a control scheme of the control system 52. Sensors 54 provide measured data from the crane 12 and its current stated. In parallel the input from the operator station control surfaces are used to set a target value for the crane 12, such as speed, position or hydraulic pressure. CPU 56 calculates a deviation of the measured values by calculating a target value from the operators input and evaluates the deviation. In case a deviation is detected, control system 52 calculates a corrective measure to return crane operation parameter within the target value. The calculation is then executed by either a movement of crane 12 or an increase of hydraulic power.

In a first example, CPU 56 compares a target value for actuating speed of crane 12. This target value is set by the operators input on the related control surfaces. Usually the operator uses control levers to manipulate the crane 12. The lever adjusting speed from the operator's movement can be calculated in actuating speed of the related crane functions. If the operators speed is fast or if the movement of the levers is large this can be regarded as a requirement for a fast movement of the crane 12 by the control system 52. Sensors 54 on crane 12 collect the reaction movement of crane 12 by either angle measurement or by length measurement. Such sensors are commonly used. The feedback is then compared by the control system 52 via CPU 56. If the control system calculates a deviation of the actual movement to a target movement value, the control system 52 detects that the necessary torque for moving crane 12 is not sufficient.

One solution by the control system can be to stop movement of the crane 12 as intended by the operator and to initiate a relief movement of crane 12, such as to reduce a necessary torque requirement. The control system 52 may control crane 12 to just move the boom tip section 20 closer to the base of the crane 12. This reduces required lifting torque. When a certain movement of the boom tip section 20 has been detected, the control system 52 may switch back to the instructed movement by the operator which can be fulfilled with the required speed.

One solution of the control system can be to increase hydraulic power supply. The control system instructs the related hydraulic pump to increase its flow rate so that the necessary hydraulic force is available for actuating the crane 12. Control system 52 may also at the same time instruct the primary power source of the vehicle 30 to increase power output to drive the related hydraulic pump.

In another example, control system 52 may detect a deviation of the position of the crane in comparison to a target position. The sensors can detect current positions of the various segments of crane 12. CPU 56 compares these values with intended position values related to the operators input.

One solution by the control system can be to stop movement of the crane 12 as intended by the operator and to initiate a relief movement of crane 12, such as to reduce a necessary torque requirement. The control system 52 may control crane 12 to just move the boom tip section 20 closer to the base of the crane 12. This reduces required lifting torque. When a certain movement of the boom tip section 20 has been detected, the control system 52 may switch back to the instructed movement by the operator which can be fulfilled with the required speed.

One solution of the control system can be to increase hydraulic power supply. The control system instructs the related hydraulic pump to increase its flow rate so that the necessary hydraulic force is available for actuating the crane 12. Control system 52 may also at the same time instruct the primary power source of the vehicle 30 to increase power output to drive the related hydraulic pump.

In another example control system 52 may detect a deviation of the hydraulic pressure. Sensors 54 can detect hydraulic pressure inside the actuators 24 of crane 12. The target value can be calculated from the input of the operator and the resulting manouvers of crane 12.

One solution by the control system can be to stop movement of the crane 12 as intended by the operator and to initiate a relief movement of crane 12, such as to reduce a necessary torque requirement. The control system 52 may control crane 12 to just move the boom tip section 20 closer to the base of the crane 12. This reduces required lifting torque. When a certain movement of the boom tip section 20 has been detected, the control system 52 may switch back to the instructed movement by the operator which can be fulfilled with the required speed.

One solution of the control system can be to increase hydraulic power supply. The control system instructs the related hydraulic pump to increase its flow rate so that the necessary hydraulic force is available for actuating the crane 12. Control system 52 may also at the same time instruct the primary power source of the vehicle 30 to increase power output to drive the related hydraulic pump.

In case control system 52 detect no deviation between the measured values and the target values, the control system 52 will not initiate any corrective measures and return to further comparing target values and current values.

The control system enables the operation of the vehicle without any interference due to slow responsiveness of crane 12 during operation. The operator is relieved of permanent surveillance of the weight of the lifted cargo. This results in less fatigue and smoother work load and increase work speed.

## Claims

1. Control system configured to control movement of a hydraulically operated crane assembly and a crane tool of a working vehicle with a primary power source and a hydraulic working system,
the control system configured to calculate a deviation between an actual value and a predetermined target value of a lifting movement of the crane assembly, and configured to control the crane assembly to fulfill the predetermined target value,
the control system comprising
sensors, configured to measure actual values of an actuating speed and/or an actuating hydraulic pressure and/or positioning data of the crane assembly,
a control unit having a CPU, configured to receive the measured actual values, calculate the deviation between the actual value and predetermined target value of the lifting movement of the crane assembly and calculating corrective measures of the crane assembly to minimize deviation,
the corrective measures being either of increasing power output of the primary power source, increasing a power output of the hydraulic power source, movement of the crane assembly and/or movement of the crane tool, so that a required lifting torque is reduced and the predetermined target value is fulfilled.

2. Control system according to claim 1, wherein the sensors are configured to be attached on the crane assembly of a working vehicle, wherein the sensors supply measured data to the control unit.

3. Control system according to any previous claims, wherein the predetermined target value is configured to be derived from an operator station of a working vehicle, depending on a lever actuation by the operator according to actuating speed, actuating angle or actuating a button.

4. Method of controlling a hydraulically operated crane assembly and a crane tool of a working vehicle with a primary power source and a hydraulic working system, comprising
measuring an actual value of an actuating hydraulic pressure and/or an actuating speed and/or a position of the crane assembly,
calculating a predetermined target value derived from the operator station of the working vehicle,
calculating a deviation of a lifting movement of the crane assembly between the predetermined target value and the actual value,
calculating corrective measures to minimize the deviation,
controlling the crane assembly to execute the corrective measures and reduce a required lifting torque.

5. Method according to claim 4, wherein the corrective measures are controlling a power output of the primary power source and/or controlling the power output of the hydraulic power source and/or controlling movement of the crane assembly.

6. Method according to claim 4 or 5, wherein the controlled movement is actuating the crane assembly to move a tip of the crane assembly closer to the base of the crane assembly.

7. Method according to any of the claims 4 to 6, wherein the controlled movement is actuating a boom extension inward to bring a tip of the crane assembly closer to the base of the crane assembly.

8. Method according to any of the claims 4 to 7, wherein the controlled movement is actuating the crane assembly so that the tip of the crane assembly is moving closer to the base of the crane assembly without further lifting the tip of the crane assembly upwards.

9. Working vehicle comprising
a primary power source,
a hydraulic power source and a hydraulic working system,
a crane assembly,
having at least a first and a second boom section, rotatably attached to each other,
a boom extension, slidably attached to the second boom section,
a boom tip, attached to the boom extension,
a slewing apparatus, attached between the working vehicle and the crane assembly, sensors, at least on the crane assembly and the operator station, for measuring a position and/or hydraulic pressure and/or actuating speed of the crane assembly, and
a control system according to claim 1.

10. Working vehicle of claim 9, wherein a crane tool is attached to the crane assembly and controlled by the hydraulic working system.
